(19) Europäisches Patentamt

**European Patent Office**

**Office européen des brevets**

(11) Veröffentlichungsnummer: **0 214 657 B1**

(12) **EUROPÄISCHE PATENTSCHRIFT**

(45) Veröffentlichungstag der Patentschrift: **03.06.92**

(21) Anmeldenummer: **86112517.7**

(22) Anmeldetag: **10.09.86**

(51) Int. Cl.⁵: **H04B 17/02**

(54) Nachrichtenübertragungssystem mit Überwachung nach dem Fehlerortungsverfahren während des Betriebes.

(30) Priorität: **11.09.85 DE 3532336**

(43) Veröffentlichungstag der Anmeldung:
**18.03.87 Patentblatt 87/12**

(45) Bekanntmachung des Hinweises auf die
Patenterteilung:
**03.06.92 Patentblatt 92/23**

(84) Benannte Vertragsstaaten:
**AT BE CH DE FR GB IT LI NL SE**

(56) Entgegenhaltungen:
**DE-A- 3 201 763**
**FR-A- 2 371 830**

**THE POST OFFICE ELECTRICAL ENGINEERS JOURNAL, Band 74, Nr. 4, Januar 1982, Seiten 335-344, Old Woking, Surrey, GB; T.C. WRIGHT et al.: "8.448 Mbit/s digital line systems on carrier cables"**

(73) Patentinhaber: **SIEMENS AKTIENGESELL-
SCHAFT**
**Wittelsbacherplatz 2**
**W-8000 München 2(DE)**

Patentinhaber: **Philips Patentverwaltung
GmbH**
**Wendenstrasse 35 Postfach 10 51 49**
**W-2000 Hamburg 1(DE)**

Patentinhaber: **Standard Elektrik Lorenz Ak-
tiengesellschaft**
**Kurze Strasse 8**
**W-7000 Stuttgart 30 (Feuerbach)(DE)**

(72) Erfinder: **Rexroth, Günter**
**Pupinweg 3**
**W-6100 Darmstadt(DE)**

(74) Vertreter: **Fuchs, Franz-Josef, Dr.-Ing. et al**
**Postfach 22 13 17**
**W-8000 München 22(DE)**

EP 0 214 657 B1

## Beschreibung

Die Erfindung betrifft ein Verfahren zur Nachrichtenübertragung entsprechend dem Oberbegriff des Anspruchs 1 sowie eine Nachrichtenübertragungsanlage zur Durchführung dieses Verfahrens entsprechend dem Oberbegriff des Anspruchs 2.

Bei solchen Nachrichtenübertragungsanlagen, insbesondere bei denen, die eine hohe Übertragungskapazität aufweisen, ist es unerläßlich, sie auf Übertragungsfehler und auf Unterbrechungen hin im Betrieb zu überwachen. Ein bekanntes Überwachungsverfahren ist das nachfolgend kurz als ISM bezeichnete sogenannte In-Service-Monitoring-Verfahren. Dies ist ein kontinuierliches Überwachungs- und Fehlerortungsverfahren. Hiermit können die Zwischenregeneratoren unter anderen auf Coderegelverletzungen des Leitungscodes und auf Vorhandensein des Ausgangssignals überwacht werden. Die Übertragung der Fehler- bzw. Gutmeldungen der einzelnen Zwischenregeneratoren und der sendenden Teile der Leitungsendgeräte zu den korrespondierenden mit einer Auswertevorrichtung versehenen Leitungsendgeräten geschieht mittels adressenfreier Telegramme in einem dem Nutzsignal vorzugsweise unterlagerten schmalbandigen Telemetriekanal. Hierdurch werden außer den für das Nutzsignal benötigten Leitungen keine weiteren Hilfsadern benötigt.

Die Telegramme werden von Zwischenregenerator zu Zwischenregenerator weitergereicht, wobei in jedem Zwischenregenerator das Telemetriesignal getrennt vom Nutzsignalregenerator regeneriert wird und das eigene Telegramm an das Ende der so entstehenden Telegrammkette angehängt wird. Am Ausgang der Zwischenregeneratoren werden Telemetriesignal und Nutzsignal wieder zusammengefaßt und als gemeinsames Signal ausgesendet.

Im Normalfall wird die Meldungsübertragung durch zyklisches Abgeben eines ersten Telegramms des Telemetriesignalsenders im sendenden Teil der Leitungsendgeräte gestartet. Dieser Meldestart erfolgt bei gestörter Übertragung durch den Telemetriesignalregenerator/-sender des Zwischenregenerators, der als erster keine oder eine nicht verwertbare Eingangsmeldung erhält.

Nachteilig bei diesem Verfahren ist jedoch, daß bei einer Unterbrechung des Übertragungsweges die vor dem Unterbrechungsort befindlichen Zwischenregeneratoren bzw. die zum Unterbrechungsort hin arbeitenden Teile dieser Zwischenregeneratoren nicht mit dem bekannten ISM-Verfahren erfaßt werden können.

Ein weiterer Nachteil bei diesem Verfahren besteht darin, daß bei einer Neueinrichtung einer Übertragungsstrecke nur diejenigen Teile der bereits eingesetzten Zwischenregeneratoren mit dem ISM-Verfahren getestet werden können, die in Richtung zu der zuerst eingerichteten Endstelle hin arbeiten.

Aus der FR-A-2 371 830 ist bereits ein Fehlerortungsverfahren für die Übertragungsstrecken digitaler Signale bekannt, bei dem zwischen zwei in jeweils einer Endstelle enthaltenen Leitungsendgeräten eine Anzahl Zwischenregeneratoren angeordnet sind, wobei in den Zwischenregeneratoren Erkennungsschaltungen für ein bestimmtes Signal enthalten sind, bei dessen Empfang ein Schleifenschlußschalter aktiviert wird. Der Schleifenschluß wird dabei in der Weise ausgelöst, daß zunächst ein Vorbereitungssignal an alle Zwischenregeneratoren eine Übertragungsrichtung ausgesendet wird, auf das die Aussendung des, den eigentlichen Schleifenschlußbefehl enthaltenden digitalen Signals erfolgt. Durch den Schleifenschlußbefehl wird nicht nur die Schleifenschaltung im jeweils ersten Zwischenregenerator bewirkt, sondern gleichzeitig auch ein Vorbereitungssignalsender eingeschaltet, der an die nächsten Regeneratoren das den Schleifenschluß vorbereitende Signal abgibt.

Aus der DE-A-32 01 763 ist eine optische Übertragungsstrecke mit zwei Leitungsendgeräten und gegebenenfalls mit einen oder mehreren Zwischenregeneratoren bekannt, die jeweils mit optischen Sendern und optischen Empfängern ausgerüstet sind, wobei die optischen Sender mit einer Laserabschaltung ausgerüstet sind. Durch die Laserabschaltung werden die optischen Sender dann abgeschaltet, wenn am Ende eines Betriebssignals ein bestimmtes Steuersignal erkannt wird, oder wenn für eine vorgegebene Zeit der optische Empfänger in der Gegenrichtung kein Signal empfängt.

Der Erfindung liegt die Aufgabe zugrunde, das ISM-Verfahren dahingehend zu verbessern, daß bei einer gestörten Übertragungsstrecke alle intakten Zwischenregenerstoren bzw. bei einer Neueinrichtung einer Übertragungsstrecke alle bereits eingesetzten Zwischenregeneratoren in beiden Übertragungsrichtungen überwacht werden können.

Die Aufgabe wird durch ein Verfahren der eingangs erwähnten Art gelöst, das durch die im kennzeichnenden Teil des Patentanspruchs angegebenen Merkmale weitergebildet ist, die Aufgabe wird weiterhin durch eine Nachrichtenübertragungsanlage entsprechend dem Oberbegriff des Anspruchs 2 gelöst, die durch die kennzeichnenden Merkmale des Patentanspruchs 2 weitergebildet ist. Vorteilhafte Weiterbildungen dieser Nachrichtenübertragungsanlage sind in den Patentansprüchen 3-6 näher beschrieben.

Die Erfindung erzielt den Vorteil, daß durch eine jetzt mögliche Schleifung allein des Telemetriekanals über einen Telemetriesignalumschalter in jedem derjenigen beiden Zwischenregeneratoren, die der Fehlerstelle am nächsten liegen, sowohl die zu dieser Fehlerstelle hin arbeitenden Baugruppen der Zwischenregeneratoren (Nutzsignalregeneratoren gehend/kommend) als auch die zugehörigen Telemetriesignalregeneratoren/-sendergehend/kommend in die Überwachung nach dem ISM-Verfahren mit einbezogen werden.

Vorteilhaft ist weiterhin, daß sicher erkennbar ist, ob nur ein einziger oder mehrere Streckenabschnitte zwischen den Zwischenregeneratoren von einem Fehler betroffen sind.

Ein weiterer Vorteil der Erfindung ist insbesondere bei schwer oder nicht zugänglichen Zwischenregeneratoren, wie z. B. bei einer Streckenführung über ein unzugängliches Territorium oder bei einer Seekabelstrecke, daß bei Ausfall einer nur das Telemetriesignal verarbeitenden Baugruppe in einem Zwischenregenerator ein Weiterbetreiben dieser Übertragungsstrecke möglich ist, ohne die Überwachung der übrigen völlig ungestört arbeitenden Zwischenregeneratoren aufgeben zu müssen.

Das Ausklammern einer defekten Baugruppe des ansonsten noch funktionsfähigen Zwischenregenerators kann auch durch deren gezielte Ansteuerung mit für sie individuellen Fernsteuersignalen von einer Endstelle her ausgelöst werden.

Bei einer voll eingerichteten (bestückten) Übertragungsstrecke mit ferngespeisten Zwischenregeneratoren ist die Fernspeiseschleife bei fehlerfreiem Betrieb über einen Fernspeiseabschluß am Ende des Fernspeiseabschnitts geschlossen. Bei Unterbrechung der Fernspeiseschleife erkennt dies eine Auswerteschaltung in demjenigen Zwischenregenerator,der von der speisenden Endstelle aus gesehen unmittelbar vor der Unterbrechung liegt und schließt intern die Fernspeiseschleife, so daß alle Regeneratoren vor der Unterbrechung in diesen Fernspeiseabschnitt mit der benötigten Betriebsspannung versorgt sind. Gleiches geschieht, wenn eine Übertragungsstrecke neu eingerichtet wird und die Zwischenregeneratoren einzeln nacheinander von der speisenden Endstelle aus eingesetzt werden.

Da nach der Erfindung die Auswerteschaltung der Fernspeiseschleife als Erkennungsschaltung auch den ihr zugeordneten Telemetriesignalumschalter betätigt, entfällt u.a. das mit einem aufwendigen Meßgerätetransport zum letzteingesetzten Zwischenregenerator verbundene Einmessen vor Ort der bereits bestückten Übertragungsstreckenabschnitte zugunsten der wesentlich einfacheren und schnelleren Einmessung am Leitungsendgerät in der speisenden Endstelle mittels der Telemetriesignale.

Ebensowenig ist es erforderlich, das Nutzsignal über eine breitbandige , den nächsten Streckenabschnitt simulierende und dadurch störungsanfällige Leitungsnachbildung zu schleifen.

Das Telemetriesignal ist schmalbandig und niederfrequent. Daher kann der Telemetriesignalumschalter sehr einfach aufgebaut sein. Zudem ist eine Trennung des Telemetriesignals vom Nutzsignal nicht mehr nötig, da beide Signalarten innerhalb der Zwischenregeneratoren getrennt geführt und be- bzw. verarbeitbar sind.

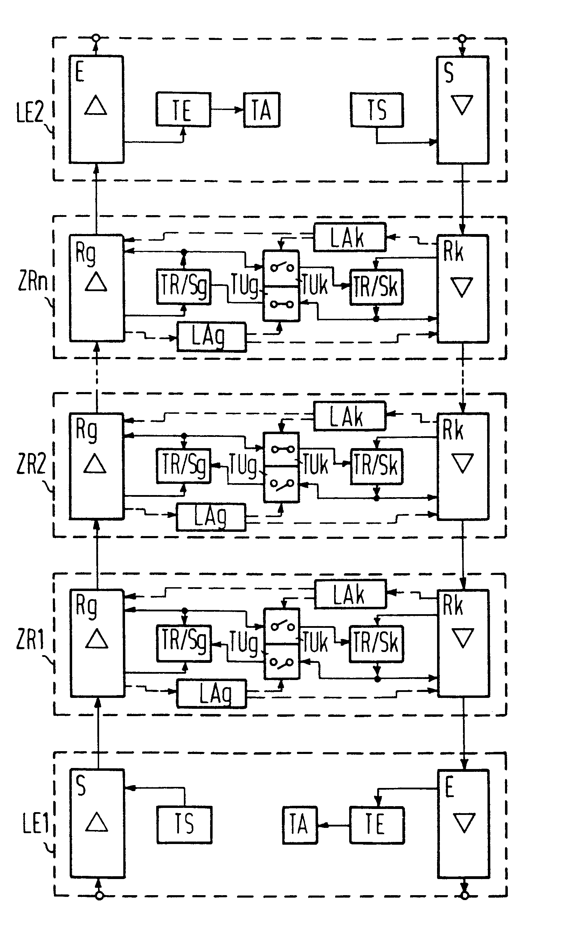

Das gemäß der Erfindung verbesserte ISM-Verfahren wird nachfolgend anhand der einzigen Figur der Zeichnung näher erläutert. Diese zeigt den prinzipiellen Aufbau einer optischen Übertragungsstrecke.

Die Nachrichtenübertragungsanlage besteht aus einem Leitungsendgerät LE1 in der nahen Endstelle und einen Leitungsendgerät LE2 in der fernen Endstelle sowie aus n Zwischenregeneratoren ZR1 bis ZRn. Die Leitungsendgeräte LE1 und LE2 weisen im wesentlichen einen Sender S und einen Empfänger E für das Nutzsignal auf. Jeder der Zwischenregeneratoren ZR1 bis ZRn hat jeweils einen Nutzsignalregenerator gehend Rg und einen Nutzsignalregenerator kommend Rk, wobei die Richtungsangabe "gehend" der Richtung von der nahen zur fernen Endstelle entspricht.

Jedem dieser Nutzsignalregeneratoren Rg bzw. Rk ist je eine Laserabschaltung LAg bzw. LAk zugeordnet. Diese erkennen einen Ausfall des optischen Eingangssignals der Nutzsignalregeneratoren Rg, Rk und veranlassen im Nutzsignalregenerator der Gegenrichtung des gleichen Zwischenregenerators das Abschalten des Sendelasers.

Die Laserabschaltung dient in erster Linie dem Personenschutz, da ohne diese Schutzschaltung beim Betrachten der Bruchfläche einer sendenden Glasfaser eines z. B. durch Beschädigung aufgetrennten Kabels die austretende optische Strahlung die Augen des Betrachters in hohem Maße gefährdet. Außerdem sind zur ISM-Überwachung der Nachrichtenübertragungsanlage in jedem Leitungsendgerät LE1 und LE 2 ein Telemetriesignalsender TS und ein Telemetriesignalempfänger TE und in jedem Zwischenregenerator ZR1 bis ZRn zur Regenerierung und Vervollständigung der einzelnen Telegramme jeweils ein Telemetriesignalregenerator/-sender gehend TR/Sg und kommend TR/Sk angeordnet. Zur Auswertung der Telemetriesignale ist ein Telemetriesignalauswertegerät TA an jeden Telemetriesignalempfänger TE innerhalb der Leitungsendgeräte LE1 und LE2 angeschlossen.

Gemäß der Erfindung sind zusätzlich in jedem Zwischenregenerator ZR1 bis ZRn jeweils ein Telemetriesignalumschalter gehend TUg und ein Telemetriesignalumschalter kommend TUk angeordnet.

Die Telemetriesignalumschalter gehend TUg werden von den Laserabschaltungen gehend LAg und die Telemetriesignalumschalter kommend TUk werden von den Laserabschaltungen kommend LAk innerhalb jedes Zwischenregenerators ZR1 bis ZRn angesteuert.

Bei einer Unterbrechung des Übertragungsweges - beispielsweise zwischen dem zweiten Zwischenregenerator ZR2 und dem n-ten Zwischenregenerator ZRn-erhält der Nutzsignalregenerator kommend Rk des zweiten Zwischenregenerators ZR2 kein Eingangssignal und die Laserabschaltung kommend LAk veranlaßt außer dem Abschalten des Sendelasers im Nutzsignalregenerator gehend Rg das Schließen des Telemetriesignalumschalters kommend TUk innerhalb des gleichen Zwischenregenerators ZR2.

Durch diese Maßnahme wird dem Telemetriesignalregenerator/-sender kommend TR/Sk das Ausgangssignal des Telemetriesignalregenerators/-senders gehend TR/Sg dieses Zwischenregenerators ZR2 zugeführt, so daß das im Leitungsendgerät der nahen Endstufe LE1 eingespeiste und in den gehenden sowie jetzt auch in den kommenden Telemetriesignalregeneratoren/-sendern TR/Sg und TR/Sk des ersten und zweiten Zwischenregenerators ZR1 und ZR2 regenerierte und ergänzte Telemetriesignal nunmehr an diesem Leitungsendgerät LE1 selbst ausgewertet werden kann.

Im n-ten Zwischenregenerator ZRn betätigt sinngemäß die Laserabschaltung gehend LAg den Telemetriesignalumschalter gehend TUg und dieser n-te Zwischenregenerator ZRn kann dadurch vom Leitungsendgerät der fernen Endstelle aus ebenfalls vollständig überwacht werden.

Jeder Telemetriesignalumschalter TUg und TUk kann - statt durch eine Unterbrechung - auch in nicht näher dargestellter Weise ferngesteuert ausgelöst werden. Hierzu ist z. B. ein Fernsteuerempfänger in jedem Zwischenregenerator geeignet, der auf für jeden Telemetriesignalumschalter individuell codierte Fernsteuersignale reagiert.

Werden als Erkennungsschaltungen zum Betätigen der Telemetriesignalumschalter die Auswerteschaltungen der Fernspeiseschleife verwendet, so ist es selbstverständlich nur sinnvoll, im gestörten Fernspeiseabschnitt das Telemetriesignal im letzten Zwischenregenerator vor der Fehlerstelle bzw. im ungestörten Fernspeiseabschnitt vor dem Fernspeiseabschluß zur jeweiligen speisenden Endstelle rückzuschleifen. Daher werden für die Zwischenregeneratoren von der nahen Endstelle bis zum Fernspeiseabschluß nur die Telemetriesignalumschalter der kommenden Richtung und ab dem Fernspeiseabschluß bis zur fernen Endstelle die Telemetriesignalumschalter der gehenden Richtung benötigt.

## Patentansprüche

1. Verfahren zur Nachrichtenübertragung zwischen zwei in jeweils einer Endstelle enthaltenen Leitungsendgeräten (LE1, LE2) über n jeweils mindestens eine Erkennungsschaltung (LAg, LAk) für Unterbrechung der Nachrichtenübertragung enthaltende Zwischenregeneratoren (ZR1, ZR2...ZRn), bei dem die Überwachung nach einem In-Service-Monitoring-Verfahren (ISM) mit Übertragung und Regenerierung von parallel zu den Nachrichten übertragenen Telemetriesignalen erfolgt, **dadurch gekennzeichnet,** daß nach dem Ansprechen einer der Erkennungsschaltungen (LAg, LAk) diese einen im gleichen Zwischenregenerator (ZR1, ZR2...ZRn) enthaltenen Telemetriesignalumschalter (TUg) betätigt, über den das ungestörte Telemetriesignal der einen Übertragungsrichtung als Ersatz für das gestörte Telemetriesignal der anderen Übertragungsrichtung in diese andere Übertragungsrichtung rückgeschleift wird.

2. Nachrichtenübertragungsanlage, die je ein Leitungsendgerät (LE1, LE2) in jeder Endstelle und n zwischen den Endstellen angeordnete, jeweils mindestens eine Erkennungsschaltung (LAg, LAk) für Unterbrechungen der Nachrichtenübertragung aufweisende Zwischenregeneratoren (ZR1, ZR2...ZRn) enthält und dabei in den Leitungsendgeräten (LE1, LE2) jeweils ein Telemetriesignalsender (TS) und ein Telemetriesignalempfänger (TE) und in den Zwischenregeneratoren wenigstens ein Telemetriesignalregenerator (TR) vorgesehen ist, **dadurch gekennzeichnet,** daß zur Durchführung eines Verfahrens nach Patentanspruch 1 in den Zwischenregeneratoren (ZR1, ZR2...ZRn) wenigstens ein, von der Erkennungsschaltung (LAg, LAk) gesteuerter Telemetriesignalumschalter (TUg) vorgesehen ist, durch den der Telemetriesignalweg vom Telemetriesignalregenerator (TR) der ungestörten Übertragungsrichtung zum Telemetriesignalsender (Sg, Sk) der gestörten Übertragungsrichtung verbindbar ist.

3. Nachrichtenübertragungsanlage nach Patentanspruch 2, **dadurch gekennzeichnet,** daß in den Zwischenregeneratoren (ZR1, ZR2...ZRn) jeweils ein Telemetriesignalregenerator (TR) und ein Telemetriesignalsender (Sg, Sk) sowie ein Telemetriesignalumschalter (TUg, TUk) für jede Übertragungsrichtung vorgesehen sind.

4. Nachrichtenübertragungsanlage nach den Patentansprüchen 2 oder 3, **dadurch gekennzeichnet,**

daß bei einer Ausbildung zur Übertragung optischer Nachrichtensignale die Erkennungsschaltung eine Laserabschaltung (LAg, LAk) ist.

5. Nachrichtenübertragungsanlage nach den Patentansprüchen 2 oder 3,
**dadurch gekennzeichnet,**
daß die Erkennungsschaltung eine Auswerteschaltung einer Fernspeiseschleife ist.

6. Nachrichtenübertragungsanlage nach den Patentansprüchen 2 bis 5,
**dadurch gekennzeichnet,**
daß die Erkennungsschaltungen (LAg, LAk) jeweils einzeln von den Endstellen (LE1, LE2) mittels Fernsteuersignalen aktivierbar sind.

## Claims

1. Method for transmitting information between two line terminating units (LE1, LE2) contained in each case in one terminal station, via n regenerative repeaters (ZR1, ZR2...ZRn) in each case containing at least one detection circuit (LAg, LAk) for interruption of the information transmission, in which method the monitoring is effected in accordance with an in-service monitoring method (ISM) with transmission and regeneration of telemetry signals transmitted in parallel with the information, characterised in that after one of the detection circuits (LAg, LAk) has responded, this circuit operates a telemetry signal switch (TUg) contained in the same regenerative repeater (ZR1, ZR2...ZRn), via which switch the undisturbed telemetry signal of the one direction of transmission is looped back, as replacement for the disturbed telemetry signal of the other direction of transmission, into this other direction of transmission.

2. Information transmission system which contains one line terminating unit (LE1, LE2) in each terminal station and n regenerative repeaters (ZR1, ZR2...ZRn) arranged between the terminal stations and exhibiting in each case at least one detection circuit (LAg, LAk) for interruptions of the information transmission, and in this arrangement one telemetry signal transmitter (TS) and one telemetry signal receiver (TE) are in each case provided in the line terminating units (LE1, LE2) and at least one telemetry signal regenerator (TR) is provided in the regenerative repeaters, characterised in that, for carrying out a method according to Claim 1, at least one telemetry signal switch (TUg), controlled by the detection circuit (LAg, LAk), is provided in the regenerative repeaters (ZR1, ZR2...ZRn), by means of which switch the telemetry signal path can be connected from the telemetry signal regenerator (TR) of the undisturbed direction of transmission to the telemetry signal transmitter (Sg, Sk) of the disturbed direction of transmission.

3. Information transmission system according to Claim 2, characterised in that in each case one telemetry signal regenerator (TR) and one telemetry signal transmitter (Sg, Sk) and also one telemetry signal switch (TUg, TUk) are provided for each direction of transmission in the regenerative repeaters (ZR1, ZR2...ZRn).

4. Information transmission system according to Claims 2 or 3, characterised in that the detection circuit is a laser shut-down circuit (LAg, LAk) in a development for transmitting optical information signals.

5. Information transmission system according to Claims 2 or 3, characterised in that the detection circuit is an evaluating circuit of a power-feeding loop.

6. Information transmission system according to Claims 2 to 5, characterised in that the detection circuits (LAg, LAk) can be in each case individually activated by means of telecontrol signals from the terminal stations (LE1, LE2).

## Revendications

1. Procédé de transmission d'informations entre deux appareils terminaux de ligne (LE1,LE2), qui sont contenus chacun dans un poste terminal, par l'intermédiaire de n régénérateurs intermédiaires (ZR1, ZR2, ... ZRn), qui comportent respectivement au moins un circuit d'identifica-tion (LAg, LAk) pour l'interruption de la transmission d'informations, et selon lequel le contrôle est effectué selon un procédé in-service-monitoring (contrôle en service) (ISM) avec transmission et régénération de signaux de télémétrie transmis parallèlement aux informations,
caractérisé par le fait
qu'après la réponse de l'un des circuits d'identification (LAg, LAk), ce circuit actionne un commutateur (TUg) des signaux de télémétrie, qui est présent dans le même régénérateur intermédiaire (ZR1,ZR2,...ZRn) et au moyen duquel le signal de télémétrie non perturbé circulant dans un sens de transmission est renvoyé en boucle, en remplacement du signal de télémétrie parasité circulant dans l'autre sens de transmission, dans cet autre sens de transmission.

2. Installation de transmission d'informations, qui comporte respectivement un appareil terminal de ligne (LE1, LE2) dans chaque poste terminal et n régénérateurs intermédiaires (ZR1, ZR2,... ZRn) disposés entre les postes terminaux et comportant respectivement au moins un circuit d'identification (LAg, LAk) pour des interruptions de la transmission d'informations, respectivement un émetteur de signaux de télémétrie (TS) et un récepteur de télémétrie (TE) étant prévus dans les appareils terminaux de ligne (LE1,LE2) tandis qu'au moins un régénérateur (TR) des signaux de télémétrie est prévu dans les régénérateurs intermédiaires, caractérisé par le fait

que pour la mise en oeuvre d'un procédé suivant la revendication 1, dans les régénérateurs intermédiaires (ZR1, ZR2 ... ZRn), il est prévu au moins un commutateur (TUg) des signaux de télémétrie, qui est commandé par le circuit d'identification (LAg, LAk) et au moyen duquel le trajet des signaux de télémétrie peut être raccordé depuis le régénérateur (TR) des signaux de télémétrie dans le sens de transmission non perturbé à l'émetteur (Sg, Sk) des signaux de télémétrie dans le sens de transmission perturbé.

3. Installation de transmission d'informations suivant la revendication 2, caractérisée par le fait que dans les régénérateurs intermédiaires (ZR1,ZR2 ... ZRn), il est prévu respectivement un régénérateur (TR) des signaux de télémétrie et un émetteur (Sg, Sk) des signaux de télémétrie ainsi qu'un commutateur (TUg, TUk) des signaux de télémétrie pour chaque sens de transmission.

4. Installation de transmission d'informations suivant les revendications 2 ou 3, caractérisée par le fait

que dans le cas d'une réalisation pour la transmission de signaux optiques d'informations, le circuit d'identification est un circuit d'interruption laser (LAg, LAk).

5. Installation de transmission d'informations suivant les revendications 2 ou 3, caractérisée par le fait

que le circuit d'identification est un circuit d'évaluation d'une boucle d'alimentation à distance.

6. Installation de transmission d'informations suivant les revendications 2 à 5, caractérisée par le fait

que les circuits d'identification (LAg, LAk) peuvent être activés respectivement individuellement par les postes terminaux (LE1, LE2), au moyen de signaux de télécommande.